# EUROPÄISCHE PATENTSCHRIFT

(11) **EP 1 197 866 B1**
(45) Veröffentlichungstag und Bekanntmachung des Hinweises auf die Patenterteilung: **04.07.2007**
(21) Anmeldenummer: 01123997.7
(22) Anmeldetag: 08.10.2001
(51) Int. Cl.: G06F 11/36

(54) **Programmgesteuerte Einheit**
Program controlled unit
Unité commandée par programme

(30) Priorität: 10.10.2000 DE 10050011
(43) Veröffentlichungstag der Anmeldung: 17.04.2002
(73) Patentinhaber: Infineon Technologies AG, 81669 München (DE)
(72) Erfinder: Mayer, Albrecht, Dr., 82041 Deisenhofen (DE)
(74) Vertreter: Jannig, Peter

(56) Entgegenhaltungen:
- US-A- 4 456 951
- US-A- 5 678 003

## Beschreibung

Die vorliegende Erfindung betrifft eine Vorrichtung gemäß dem Oberbegriff des Patentanspruchs 1.

Programmgesteuerte Einheiten gemäß dem Oberbegriff des Patentanspruchs 1 sind beispielsweise Mikroprozessoren, Mikrocontroller, Signalprozessoren etc.

Die Anhalte-Einrichtung, durch welche die Programmausführung durch eine ein Programm ausführende Programmausführungs-Einheit der programmgesteuerten Einheit angehalten werden kann, ist beispielsweise ein sogenanntes On-Chip-Debug-Support- bzw. OCDS-Modul.

OCDS-Module besitzen die Fähigkeit, das Auftreten bestimmter Ereignisse (Breakpoints), beispielsweise den Zugriff auf eine bestimmte Adresse im Programmspeicher oder im Datenspeicher, die Ausführung eines bestimmten Befehls, das Auslesen oder Einschreiben bestimmter Daten aus bzw. in einen Speicher, zu überwachen, und im Ansprechen auf das Eintreten des Ereignisses die Programmausführung durch die Programmausführungs-Einheit, welcher sie zugeordnet ist, anzuhalten.

Wenn die Programmausführung angehalten ist, kann ein externer Debugger die angehaltene programmgesteuerte Einheit und/oder das diese enthaltende System nach möglichen Ursachen für eine nicht ordnungsgemäße Funktion untersuchen und/oder - beispielsweise durch die Veränderung von Registerinhalten - in einen bestimmten Zustand versetzen.

Insbesondere, aber nicht ausschließlich im letztgenannten Fall, läßt man die programmgesteuerte Einheit danach wieder weiterlaufen, um die Fehlersuche fortzusetzen oder die Auswirkungen der vorgenommenen Veränderungen zu überprüfen.

Aufgrund des immer komplexer werdenden Aufbaus der programmgesteuerten Einheiten und der diese enthaltenden Systeme kommt es jedoch bisweilen vor, daß die programmgesteuerte Einheit auch dann, wenn während des Anhaltens der Programm-ausführung keine bleibenden Veränderungen vorgenommen wurden, bei der Fortsetzung der Programmausführung nicht so weiterläuft wie sie es getan hätte, wenn die Programmausführung nicht angehalten worden wäre. Die Folge ist, daß in solchen programmgesteuerten Einheiten oder Systemen auftretende Fehler nicht oder nur bedingt erkannt und analysiert werden können.

Eine programmgesteuerte Einheit gemäß dem Oberbegriff des Patentanspruchs 1 ist auch aus Dokument US-A-5 678 003 bekannt.

Der vorliegenden Erfindung, wie sie in Patentanspruch 1 definiert wird, liegt daher die Aufgabe zugrunde, die programmgesteuerte Einheit gemäß dem Oberbegriff des Patentanspruchs 1 derart weiterzubilden, daß diese zumindest dann, wenn in ihr während des Anhaltens der Programmausführung keine oder jedenfalls keine nicht wieder rückgängig gemachten Manipulationen erfolgt sind, bei der Fortsetzung der Programmausführung unter allen Umständen genau so weiterläuft wie sie es getan hätte, wenn die Programmausführung nicht angehalten worden wäre.

Diese Aufgabe wird erfindungsgemäß durch die in Patentanspruch 1 beanspruchte programmgesteuerte Einheit gelöst.

Dadurch, daß im Falle eines Anhaltens der Programmausführung nicht nur die das Programm ausführende Programmausführungs-Einheit, sondern auch weitere Komponenten der programmgesteuerten Einheit, ins besondere weitere Programmausführungs-Einheiten und/oder mit den anzuhaltenden Programmausführungs-Einheiten kooperierende Komponenten der programmgesteuerten Einheit angehalten werden, kann erreicht werden, daß sich während des Anhaltens der Programmausführungs-Einheit nichts verändert, das Einfluß auf eine spätere Fortsetzung der Programmausführung und/oder die dabei erhaltenen Ergebnisse hat oder haben könnte.

Sofern während des Anhaltens der Programmausführung nicht absichtlich bleibende Veränderungen in der programmgesteuerten Einheit vorgenommen wurden, kann eine wie beansprucht ausgebildete programmgesteuerte Einheit nach dem Anhalten der Programmausführung zuverlässig so weiterlaufen, wie sie es getan hätte, wenn sie nicht angehalten worden wäre.

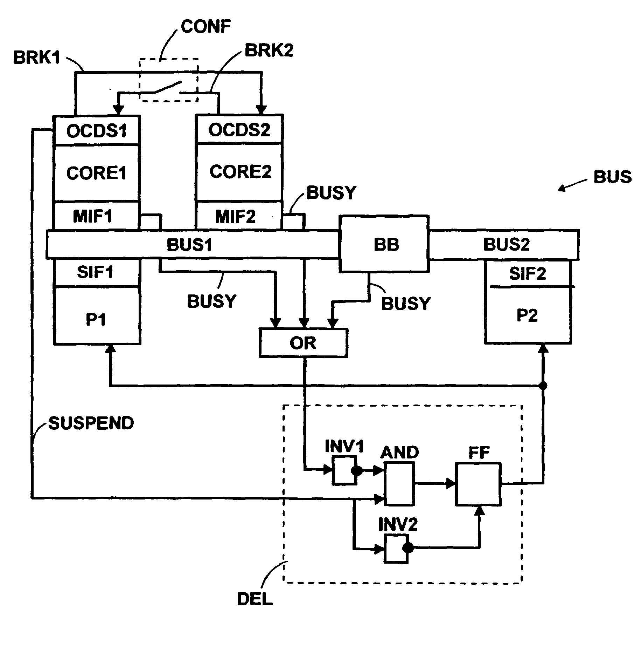

Vorteilhafte Weiterbildungen der Erfindung sind den Unteransprüchen, der folgenden Beschreibung und der Figur entnehmbar.

Die Erfindung wird nachfolgend anhand eines Ausführungsbeispiels unter Bezugnahme auf die Figur näher beschrieben.

Die Figur zeigt schematisch den Aufbau der nachfolgend näher beschriebenen programmgesteuerten Einheit.

Bei der programmgesteuerten Einheit handelt es sich im betrachteten Beispiel um einen Mikrocontroller. Es sei jedoch bereits an dieser Stelle darauf hingewiesen, daß hierauf keine Einschränkung besteht; die nachfolgend beschriebenen Besonderheiten der programmgesteuerten Einheit können auch bei beliebigen anderen programmgesteuerten Einsatz kommen.

Der Vollständigkeit halber sei darauf hingewiesen, daß von der betrachteten programmgesteuerten Einheit nur die vorliegend besonders interessierenden Bestandteile derselben gezeigt sind und beschrieben werden.

Wie aus der Figur ersichtlich ist, umfaßt die betrachtete programmgesteuerte Einheit
- eine erste Programmausführungs-Einheit CORE1,
- ein der ersten Programmausführungs-Einheit CORE1 zugeordnetes On-Chip-Debug-Support- bzw. OCDS-Modul OCDS1,
- eine der ersten Programmausführungs-Einheit CORE1 zugeordnete (Master-)Schnittstelle MIF1 zum Anschluß an einen Bus BUS,
- eine zweite Programmausführungs-Einheit CORE2,
- ein der zweiten Programmausführungs-Einheit CORE2 zugeordnetes On-Chip-Debug-Support- bzw. OCDS-Modul OCDS2,
- eine der zweiten Programmausführungs-Einheit CORE2 zugeordnete (Master-)Schnittstelle MIF2 zum Anschluß an den bereits erwähnten Bus BUS,
- eine erste Peripherie-Einheit P1,
- eine der ersten Peripherie-Einheit P1 zugeordnete (Slave-) Schnittstelle SIF1 zum Anschluß an den bereits erwähnten Bus BUS,
- eine zweite Peripherie-Einheit P2,
- eine der zweiten Peripherie-Einheit P2 zugeordnete (Slave-) Schnittstelle SIF2 zum Anschluß an bereits erwähnten Bus BUS,
- den bereits mehrfach erwähnten Bus BUS, wobei dieser Bus aus einem ersten Bus-Teil BUS1, einem zweiten Bus-Teil BUS2, und einer die Bus-Teile BUS1 und BUS2 miteinander verbindenden Bus Bridge BB,
- eine Anhaltekonfigurationsvorrichtung CONF, und
- eine Anhalteverzögerungsvorrichtung DEL.

Die erste Programmausführungs-Einheit CORE1 und die zweite Programmausführungs-Einheit CORE2 führen unabhängig voneinander das selbe oder verschiedene Programme aus.

Die Peripherie-Einheiten P1 und P2 sind beispielsweise A/D-Wandler, Timer, DMA-Controller oder sonstige Einheiten, die in programmgesteuerten Einheiten neben einer oder mehreren Programmausführungs-Einheiten zum Einsatz kommen können und mit diesen kooperieren.

Die Bus Bridge BB dient zur Verbindung der Bus-Teile BUS1 und BUS2. Bus Bridges werden vorgesehen, damit die die Datenübertragung störenden Leitungskapazitäten gering gehalten werden können und/oder damit unterschiedlich schnelle und/oder unterschiedlich aufgebaute oder arbeitende Busse bzw. Bus-Teile aneinander gekoppelt werden können. Die Bus Bridge BB nimmt vom Bus-Teil BUS1 Daten entgegen und leitet sie an den Bus-Teil BUS2 weiter, und nimmt umgekehrt vom Bus-Teil BUS2 Daten entgegen und leitet sie an den Bus-Teil BUS1 weiter; die weiterzuleitenden Daten werden normalerweise in einem Puffer zwischengespeichert.

Die den Programmausführungs-Einheiten zugeordneten OCDS-Module OCDS1 und OCDS2 ermöglichen es, die Programmausführungs-Einheiten, denen sie zugeordnet sind, durch einen externen Debugger zu debuggen.

Die vorliegend besonders interessierende Eigenschaft der OCDS-Module OCDS1 und OCDS2 besteht darin, daß sie als Anhalte-Einrichtung zum Anhalten der Programmausführung durch die Programmausführungs-Einheit, welcher sie zugeordnet sind, verwendet werden können; die OCDS-Module besitzen die Fähigkeit, das Auftreten bestimmter Ereignisse (Breakpoints) in den Programmausführungs-Einheiten, denen sie zugeordnet sind, beispielsweise den Zugriff auf eine bestimmte Adresse im Programmspeicher oder im Datenspeicher, die Ausführung eines bestimmten Befehls, das Auslesen oder Einschreiben bestimmter Daten aus bzw. in einen Speicher zu überwachen, und im Ansprechen auf das Eintreten des Ereignisses die Programmausführung durch die Programmausführungs-Einheit, welcher sie zugeordnet sind, anzuhalten. Insoweit besteht kein Unterschied zu herkömmlichen OCDS-Modulen.

Die im betrachteten Beispiel durch die OCDS-Module OCDS1 und OCDS2 gebildeten Anhalte-Einrichtungen weisen darüber hinaus die Eigenschaft auf, daß sie veranlassen können, daß neben der Programmausführungs-Einheit, welcher sie jeweils zugeordnet sind, auch andere Komponenten der programmgesteuerten Einheit angehalten werden.

Die anderen Komponenten umfassen im betrachteten Beispiel
- eine oder mehrere Programmausführungs-Einheiten, welchen keine oder eine andere als die das Anhalten der Programmausführung initiierende Anhalte-Einrichtung zugeordnet ist, und
- eine oder mehrere mit den Programmausführungs-Einheiten kooperierende Einheiten der programmgesteuerten Einheit.

Im betrachteten Beispiel
- kann das erste OCDS-Modul OCDS1 veranlassen, daß neben der ersten Programmausführungs-Einheit CORE1, welcher es zugeordnet ist, auch die zweite Programmausführungs-Einheit CORE2 sowie die erste Peripherie-Einheit P1 und die zweite Peripherie-Einheit P2 angehalten werden, und
- kann das zweite OCDS-Modul OCDS2 veranlassen, daß neben der zweiten Programmausführungs-Einheit CORE2, welcher es zugeordnet ist, auch die erste Programmausführungs-Einheit CORE1 angehalten wird.

Der Auslöser dafür, daß das zweite OCDS-Modul OCDS2 das Anhalten der zweiten Programmausführungs-Einheit CORE2 und der ersten Programmausführungs-Einheit CORE1 veranlaßt, besteht darin, daß diese die Erfüllung einer Breakpoint-Bedingung durch die zweite Programmausführungs-Einheit CORE2 feststellt.

Der Auslöser dafür, daß das erste OCDS-Modul OCDS1 das Anhalten der ersten Programmausführungs-Einheit CORE1, der zweiten Programmausführungs-Einheit CORE2, und der Peripherie-Einheiten P1 und P2 veranlaßt, besteht darin, daß das erste OCDS-Modul OCDS1 die Erfüllung einer Breakpoint-Bedingung durch die erste Programmausführungs-Einheit CORE1 feststellt. Es kann (muß aber nicht) vorgesehen werden, daß das erste OCDS-Modul OCDS1 auch im Fall, daß es vom zweiten OCDS-Modul OCDS2 dazu veranlaßt wird, die erste Programmausführungs-Einheit CORE1 anzuhalten, das Anhalten der ersten Peripherie-Einheit P1 und der zweiten Peripherie-Einheit P2 veranlaßt; ob dies der Fall ist, ist im ersten OCDS-Modul OCDS1 vorzugsweise einstellbar.

Das Anhalten der zweiten Programmausführungs-Einheit CORE2 durch das erste OCDS-Modul OCDS1 erfolgt durch ein Signal BRK1, welches das erste OCDS-Modul OCDS1 an das zweite OCDS-Modul OCDS2 ausgibt, und welches das zweite OCDS-Modul OCDS2 zum Anlaß nimmt, die zweite Programmausführungs-Einheit CORE2 anzuhalten; das Anhalten der ersten Programmausführungs-Einheit CORE1 durch das zweite OCDS-Modul OCDS2 erfolgt durch ein Signal BRK2, welches das zweite OCDS-Modul OCDS2 an das erste OCDS-Modul OCDS1 ausgibt, und welches das erste OCDS-Modul OCDS1 zum Anlaß nimmt, die erste Programmausführungs-Einheit CORE1 anzuhalten. Der Vollständigkeit halber sei angemerkt, daß die Signale BRK1 und BRK2 auch direkt der Programmausführungs-Einheit zugeführt werden kann, deren Anhalten veranlaßt werden soll; dadurch können auch Programmausführungs-Einheiten angehalten werden, denen kein OCDS-Modul zugeordnet ist.

Die Signale BRK1 und BRK2 passieren auf ihrem Weg zu den OCDS-Modulen, für welche sie bestimmt sind, die Anhaltekonfigurationsvorrichtung CONF. Die Anhaltekonfigurationsvorrichtung CONF enthält Schaltelemente, über welche einstellbar ist, ob das Signal BRK1 zum zweiten OCDS-Modul OCDS2 durchgelassen wird, und/oder ob das Signal BRK2 zum ersten OCDS-Modul OCDS1 durchgelassen wird.

Das Anhalten der Peripherie-Einheiten P1 und P2 wird vom ersten OCDS-Modul OCDS1 durch die Ausgabe eines Signals SUSPEND = 1 veranlaßt. Dieses Suspend-Signal wird etwa zu dem Zeitpunkt, zu dem die Programmausführungs-Einheiten CORE1 und/oder CORE2 angehalten werden, ausgegeben, und der Anhalteverzögerungsvorrichtung DEL zugeführt. Die Anhalteverzögerungsvorrichtung DEL gibt dieses Signal mit einer bestimmten Verzögerung an die Peripherie-Einheiten P1 und P2 weiter und hält diese dadurch an; durch die verzögerte Weiterleitung des SUSPEND-Signals an die Peripherie-Einheiten P1 und P2 werden diese erst eine gewisse Zeit nach dem Zeitpunkt des Anhaltens der Programmausführungs-Einheiten angehalten.

Aus dem verzögerten Anhalten der Peripherie-Einheiten P1 und P2 ergeben sich einige Vorteile, auf welche später noch genauer eingegangen wird.

Die Weiterleitung des SUSPEND-Signals an die Peripherie-Einheiten P1 und P2 erfolgt im betrachteten Beispiel dann, wenn feststeht, daß die Komponenten der programmgesteuerten Einheiten, die Bus-Master sein können, und die Bus Bridge BB keine Daten mehr auszugeben haben und/oder nicht mehr auf bereits angeforderte oder noch anzufordernde Daten warten.

Die Komponenten, die Bus-Master sein können, sind im betrachteten Beispiel die Programmausführungs-Einheiten CORE1 und CORE2; die restlichen Einheiten der am Bus BUS angeschlossenen Einheiten (die Peripherie-Einheiten P1 und P2) können nur Slaves sein. Daher werden im betrachteten Beispiel die erste Programmausführungs-Einheit CORE1, die zweite Programmausführungs-Einheit CORE2, und die Bus Bridge BB daraufhin überprüft, ob sie noch Daten auszugeben haben und/oder auf bereits angeforderte oder noch anzufordernde Daten warten.

Diese Überprüfung erfolgt anhand eines BUSY-Signals, das die erste Programmausführungs-Einheit CORE1 (und/oder die dieser zugeordnete Schnittstelle MIF1), die zweite Programmausführungs-Einheit CORE2 (und/oder die dieser zugeordnete Schnittstelle MIF2), und die Bus Bridge BB ausgeben. Durch dieses BUSY-Signal zeigen die genannten Einheiten an, ob sie noch Daten auszugeben haben und/oder auf bereits angeforderte oder noch anzufordernde Daten warten. Die BUSY-Signale haben im betrachteten Beispiel jeweils
- den Wert 1, wenn die jeweilige Einheit noch Daten auszugeben hat und/oder auf bereits angeforderte oder noch anzufordernde Daten wartet, und
- den Wert 0, wenn die jeweilige Einheit keine Daten auszugeben hat und/oder nicht mehr auf bereits angeforderte oder noch anzufordernde Daten wartet.

Die BUSY-Signale der ersten Programmausführungs-Einheit CORE1 (und/oder der dieser zugeordneten Schnittstelle MIF1), der zweiten Programmausführungs-Einheit CORE2 (und/oder der dieser zugeordneten Schnittstelle MIF2), und der Bus Bridge BB werden durch ein ODER-Gatter OR einer ODER-Verknüpfung unterzogen; das Ausgangssignal des ODER-Gliedes OR wird der Anhalteverzögerungsvorrichtung DEL zugeführt.

Die Anhalteverzögerungsvorrichtung DEL enthält einen ersten Inverter INV1, einen zweiten Inverter INV2, ein UND-Gatter AND, und ein Flip-Flop FF, wobei
- der erste Inverter INV1 das Ausgangssignal des ODER-Gatters OR invertiert,
- der zweite Inverter INV2 das der Anhalteverzögerungsvorrichtung DEL zugeführte SUSPEND-Signal invertiert,
- das UND-Gatter AND das Ausgangssignal des ersten Inverters INV1 und das der Anhalteverzögerungsvorrichtung DEL zugeführte (nicht invertierte) SUSPEND-Signal einer UND-Verknüpfung unterzieht, und
- das Flip-Flop FF durch das Ausgangssignal des UND-Gatters AND gesetzt, durch das Ausgangssignal des zweiten Inverters INV2 zurückgesetzt wird, und das die Peripherie-Einheiten P1 und P2 anhaltende SUSPEND-Signal an diese ausgibt.

Wie leicht nachzuvollziehen ist, gibt die Anhalteverzögerungsvorrichtung DEL erst dann ein die Peripherie-Einheiten P1 und P2 anhaltendes SUSPEND-Signal (SUSPEND = 1) an diese aus, wenn
- ihr ein Signal SUSPEND = 1 zugeführt wird, und
- alle Signale BUSY der Programmausführungs-Einheiten CORE1 und CORE2 (und/oder der diesen zugeordneten Schnittstellen MIF1 und MIF2) sowie der Bus Bridge BB den Wert 0 aufweisen.

Das verzögerte Anhalten der Peripherie-Einheiten P1 und P2 gibt den Programmausführungs-Einheiten CORE1 und CORE2 oder sonstigen Bus-Mastern die Gelegenheit, die zum Zeitpunkt des Anhaltens der Programmausführung bereits begonnenen oder bestimmte andere Schreib- oder Lesezugriffe auszuführen (beispielsweise den sogenannten Write-Back-Puffer der Programmausführungs-Einheiten zu leeren). Dies erweist sich als vorteilhaft,
- weil sich dadurch das an das Anhalten der programmgesteuerten Einheit anschließende Debuggen derselben vereinfacht und zuverlässigere Ergebnisse über den aktuellen Zustand der programmgesteuerten Einheit liefert, und
- weil die programmgesteuerte Einheit dadurch in einen Zustand versetzt wird, durch den gewährleistet ist, daß die programmgesteuerte Einheit nach der Aufhebung des Anhalte-Zustandes ordnungsgemäß weiterarbeitet (so weiterarbeitet, wie sie es tun würde, wenn sie nicht angehalten worden wäre).

Wenn die programmgesteuerte Einheit nach dem Anhalten und Debuggen derselben wieder weiterlaufen soll, wird
- zunächst das der Anhalteverzögerungsvorrichtung DEL zugeführte Signal SUSPEND auf den Wert 0 gesetzt, was zur Folge hat daß das Flip-Flop FF zurückgesetzt wird und ein die Peripherie-Einheiten P1 und P2 nicht mehr anhaltendes Signal SUSPEND = 0 aus der Anhalteverzögerungsvorrichtung DEL ausgegeben wird, und
- danach das Anhalten der Programmausführung durch die Programmausführungs-Einheiten aufgehoben wird.

Der Vollständigkeit halber sei angemerkt, daß es hierzu nicht, oder jedenfalls nicht in allen Fällen erforderlich ist, jeweils alle Programmausführungs-Einheiten anzuhalten. Ebenso ist es hierzu nicht, oder jedenfalls nicht in allen Fällen erforderlich, jeweils alle Peripherie-Einheiten anzuhalten. Allerdings sollten Komponenten der programmgesteuerten Einheit, bei welchen nicht ausgeschlossen werden kann, daß sie auf eine angehaltene Komponente zugreifen, ebenfalls angehalten werden.

Es dürfte einleuchten, daß von den vorstehend beschriebenen Besonderheiten der betrachteten programmgesteuerten Einheit - gegebenenfalls nach entsprechender Modifikation - auch Gebrauch gemacht werden kann, wenn
- die programmgesteuerte Einheit mehr oder weniger als zwei Programmausführungs-Einheiten enthält,
- nicht jeder Programmausführungs-Einheit ein OCDS-Modul (eine die zugeordnete Programmausführungs-Einheit anhalten könnende Anhalte-Einrichtung) zugeordnet ist,
- mehreren Programmausführungs-Einheit gemeinsames einziges OCDS-Modul (eine einzige Anhalte-Einrichtung) zugeordnet ist,
- die programmgesteuerte Einheit mehr oder weniger als zwei Peripherie-Einheiten enthält,
- die Bus-Master der programmgesteuerten Einheit nicht oder nicht ausschließlich durch die Programmausführungs-Einheiten gebildet werden, und/oder
- wenn die programmgesteuerte Einheit keine oder mehrere Bus Bridges enthält.

Bei wie beschrieben oder ähnlich aufgebauten programmgesteuerten Einheiten kann zuverlässig gewährleistet werden, daß diese zumindest dann, wenn in ihnen während des Anhaltens der Programmausführung keine oder jedenfalls keine nicht wieder rückgängig gemachten Manipulationen erfolgt sind, bei der Fortsetzung der Programmausführung so weiterlaufen wie sie es getan hätten, wenn die Programmausführung nicht angehalten worden wäre.

## Patentansprüche

1. Programmgesteuerte Einheit mit einer oder mehreren Programmausführungs-Einheiten (CORE1, CORE2)zur Ausführung eines Programms, und weiteren komponenten,
wobei wenigstens einer der Programmausführungs-Einheiten eine Anhalte-Einrichtung (OCDS1, OCDS2) zugeordnet ist, durch welche die Programmausführung durch die Programmausführungs-Einheiten mittels eines Auhaltesignals angehalten wird,
wobei die Komponenten der programmgesteuerten Einheit, zumindest teilweise über einen oder mehrere Busse (BUS, BUS1, BUS2) miteinander verbunden sind,
**dadurch gekennzeichnet,**
**daß** die programmgesteuerte Einheit ein Mikroprozessor, ein Mikrocontroller, oder ein Signalprozessor ist,
**daß** die Anhalte-Einrichtung (OCDS1, OCDS2) parallel zum Anhaltesignal ein unterbrechungssignal aussendet, daß dann, wenn die Programmauführungs-Einheiten oder ihnen zugeordnete Bus-Schnittstellen oder andere Bus-Master, die kein Anhalte-Signal erhalten haben, keine Daten mehr auszugeben haben und/ oder nicht mehr auf bereits angeforderte Daten warten, sie dies mittels des NICHT-BUSY-Wertes BUSY-Signals signalisieren, und
**daß** dann, wenn alle Programmausführungs-Einheiten und sonstigen Bus-Master den NICHT-BUSY-Wert senden nachdem die Anhalte-Einrichtung ein Unterbrechungssignal ausgesendet hat, die Peripherie-Einheiten (P1, P2), die keine Bus-Master sind oder sein können, angehalten werden.

2. Programmgesteuerte Einheit nach Anspruch 1,
**dadurch gekennzeichnet,**
**daß** die Komponenten der programmgesteuerten Einheit, die auf Veranlassung der Anhalte-Einrichtung (OCDS1, OCDS2) anhaltbar sind, eine oder mehrere Programmausführungs-Einheiten (CORE1, CORE2), welcher die Anhalte-Einrichtung nicht zugeordnet ist, umfassen.

3. Programmgesteuerte Einheit nach einem der vorhergehenden Ansprüche,
**dadurch gekennzeichnet,**
**daß** die mit den Programmausführungs-Einheiten (CORE1, CORE2) kooperierenden Peripherieeinheiten (P1, P2) der programmgesteuerten Einheit erst angehalten werden, wenn eine zwei Busse (BUS1, BUS2) oder Bus-Teile miteinander verbindende Bus Bridge (BB) keine Daten mehr weiterzuleiten hat.

4. Programmgesteuerte Einheit nach einem der vorhergehenden Ansprüche,
**dadurch gekennzeichnet,**
**daß** die Aufhebung des Anhalte-Zustandes der angehaltenen Komponenten der programmgesteuerte Einheit **dadurch** erfolgt, daß zunächst die mit den Programmausführungs-Einheiten (CORE1, CORE2) kooperierenden Peripherieeinheiten (P1, P2) der programmgesteuerten Einheit zur Wiederaufnahme des Betriebes veranlaßt werden, und daß erst danach die Programmausführungs-Einheiten zur Wiederaufnahme des Betriebes veranlaßt werden.

5. Programmgesteuerte Einheit nach einem der vorhergehenden Ansprüche,
**dadurch gekennzeichnet,**
**daß** die Aufhebung des Anhalte-Zustandes der angehaltenen Komponenten der programmgesteuerte Einheit **dadurch** erfolgt, daß zunächst die Komponenten der programmgesteuerten Einheit, die nur Bus-Slave sein können, zur Wiederaufnahme des Betriebes veranlaßt werden, und daß erst danach die Komponenten der programmgesteuerten Einheit, die Bus-Master sein können, zur Wiederaufnahme des Betriebes veranlaßt werden.

6. Programmgesteuerte Einheit nach einem der vorhergehenden Ansprüche,
**dadurch gekennzeichnet,**
**daß** die Anhalte-Einrichtung durch ein OCDS-Modul gebildet wird.

## Claims

1. Programmable unit having one or more program running units (CORE1, CORE2) for running a program, and further components, with at least one of the program running units having an associated stopping device (OCDS1, OCDS2) by means of which the running of the programs is stopped by the program running units by means of a stop signal,
with the components of the programmable unit being at least partially connected to one another via one or more buses (BUS, BUS1, BUS2),
**characterized**
**in that** the programmable unit is a microprocessor, a microcontroller or a signal processor,
**in that** the stopping device (OCDS1, OCDS2) transmits an interrupt signal in parallel with the stop signal,
**in that**, when the program running units or bus interfaces associated with them or other bus masters, which have not received a stop signal, have no more data to output and/or are no longer waiting for already requested data, they signal this by means of the NOT-BUSY value of a BUSY signal, and
**in that**, when all of the program running units and other bus masters transmit the NOT-BUSY value after the stopping device has transmitted an interrupt signal, the peripheral units (P1, P2) which are not bus masters or cannot be bus masters are stopped.

2. Programmable unit according to Claim 1,
**characterized**
**in that** the components of the programmable unit which can be stopped by the stopping device (OCDS1, OCDS2) include one or more program running units (CORE1, CORE2) which are not associated with the stopping device.

3. Programmable unit according to Claim 5 or 6,
**characterized**
**in that** those peripheral units (P1, P2) of the programmable unit which cooperate with the program running units (CORE1, CORE2) are stopped only when a bus bridge (BB), which connects two buses (BUS1, BUS2) or bus parts to one another, has no more data to pass on.

4. Programmable unit according to one of the preceding claims,
**characterized**
**in that** the stopped state of those components of the programmable unit which have been stopped is cancelled first of all by those peripheral units (P1, P2) of the programmable unit which cooperate with the program running units (CORE1, CORE2) recommencing operation, and by the program running units not recommencing operation until after this has happened.

5. Programmable unit according to one of the preceding claims,
**characterized**
**in that** the stopped state of those components of the programmable unit which have been stopped is cancelled first of all by those components of the programmable unit which may be only a bus slave recommencing operation, and by those components of the programmable unit which can be a bus master recommencing operation only after this has happened.

6. Programmable unit according to one of the preceding claims,
**characterized**
**in that** the stopping device is formed by an OCDS module.

## Revendications

1. Unité commandée par programme comprenant une ou plusieurs unités d'exécution de programme (CORE1, CORE2) pour exécuter un programme ainsi que d'autres composants, un dispositif d'arrêt (OCDS1, OCDS2) par lequel l'exécution du programme par les unités d'exécution de programme est arrêtée au moyen d'un signal d'arrêt étant associé à au moins une des unités d'exécution de programme, les composants de l'unité commandée par programme étant reliés ensemble au moins partiellement par le biais d'un ou de plusieurs bus (BUS, BUS1, BUS2), **caractérisée en ce que** l'unité commandée par programme est un microprocesseur, un microcontrôleur ou un processeur de signal, que le dispositif d'arrêt (OCDS1, OCDS2) émet un signal d'interruption en parallèle avec le signal d'arrêt, que lorsque les unités d'exécution de programme ou les interfaces de bus qui leur sont associées ou les autres maîtres de bus qui n'ont pas reçu de signal d'arrêt n'ont plus de données à émettre et/ou n'attendent plus de données déjà demandées, ils signalent cette situation au moyen de la valeur PAS OCCUPÉ d'un signal OCCUPÉ (BUSY), que lorsque toutes les unités d'exécution de programme et les autres maîtres de bus émettent la valeur PAS OCCUPÉ après l'émission d'un signal d'interruption par le dispositif d'arrêt, les unités périphériques (P1, P2) qui ne sont pas ou ne peuvent pas être des maîtres de bus sont arrêtées.

2. Unité commandée par programme selon la revendication 1, **caractérisée en ce que** les composants de l'unité commandée par programme qui peuvent être arrêtés sur ordre du dispositif d'arrêt (OCDS1, OCDS2) comprennent une ou plusieurs unités d'exécution de programme (CORE1, CORE2) auxquelles le dispositif d'arrêt n'est pas associé.

3. Unité commandée par programme selon l'une des revendications précédentes, **caractérisée en ce que** les unités périphériques (P1, P2) de l'unité commandée par programme qui coopèrent avec les unités d'exécution de programme (CORE1, CORE2) ne sont arrêtées que lorsqu'une passerelle de bus (BB) qui relie ensemble deux bus (BUS1, BUS2) ou parties de bus n'a plus de données à transmettre.

4. Unité commandée par programme selon l'une des revendications précédentes, **caractérisée en ce que** l'annulation de la situation d'arrêt des composants arrêtés de l'unité commandée par programme s'effectue par le fait que les unités périphériques (P1, P2) de l'unité commandée par programme qui coopèrent avec les unités d'exécution de programme (CORE1, CORE2) sont tout d'abord invitées à reprendre le fonctionnement et qu'ensuite seulement les unités d'exécution de programme sont invitées à reprendre le fonctionnement.

5. Unité commandée par programme selon l'une des revendications précédentes, **caractérisée en ce que** l'annulation de la situation d'arrêt des composants arrêtés de l'unité commandée par programme s'effectue par le fait que les composants de l'unité commandée par programme qui ne peuvent être que des esclaves de bus sont tout d'abord invités à reprendre le fonctionnement et qu'ensuite seulement les composants de l'unité commandée par programme qui peuvent être des maîtres de bus sont invités à reprendre le fonctionnement.

6. Unité commandée par programme selon l'une des revendications précédentes, **caractérisée en ce que** le dispositif d'arrêt est formé par un module OCDS.
